# NOUVEAU FASCICULE DE BREVET EUROPEEN

(11) **EP 0 542 583 B2**
(45) Date de publication et mention de la décision concernant l'opposition: **26.10.2005**
(45) Mention de la délivrance du brevet: 15.01.1997
(21) Numéro de dépôt: 92402513.3
(22) Date de dépôt: 14.09.1992
(51) Int. Cl.: A23C 9/00, A23C 19/00

(54) **Procédé de traitement des laits permettant au moins de conserver leur aptitude fromagère**
Verfahren zur Behandlung von Milch, die ihre Eignung zur Käseherstellung konserviert
Process for the treatment of milk which allows to conserve its suitability for cheese production

(30) Priorité: 16.09.1991 FR 9111394
(43) Date de publication de la demande: 19.05.1993
(73) Titulaire: INSTITUT NATIONAL DE LA RECHERCHE AGRONOMIQUE (INRA), 75338 Paris Cédex 07 (FR)
(72) Inventeur: Quiblier, Jean-Paul, Poligny (FR); Ferron-Baumy, Clarisse, 50160 Torigni Sur Vire (FR); Garic, Gilles, 35000 Rennes (FR); Maubois, Jean-Louis, F-35740 Pace (FR)
(74) Mandataire: Phélip, Bruno

(56) Documents cités:
- EP-A- 0 194 286
- FR-A- 2 442 592
- FR-A- 2 465 422
- FR-A- 2 592 769
- US-A- 4 355 048
- TECHNIQUE LAITIERE vol. 1028, 1988, pages 21-23, Rennes, FR; J. FAUQUANT et al.: "Microfiltration du lait sur membrane minérale"
- JOURNAL OF DAIRY SCIENCE vol. 74, no. 8, août 1988, pages 2423-2434, Champaign, Il, US; E.D. BASTIAN et al.: "Ultrafiltration: Partitioning of milk constituents into permeate and retentate"
- J. Dairy Sci. 73, 1411-1419 (1990)
- Technologie laitière - N° 1028, p. 21-23 (1988)
- North Europ. Food and Dairy J., N° 4-5, 108-113 (1989)
- Merin et al, Lait (1990) 70, pages 281-291
- Maubois, The Australian Journal of Dairy Technology, novembre 1992, pages 91-95
- Le fromage, Eck, Lavoisier, 1984, pages 156-164

## Description

La présente invention a pour objet un procédé de traitement des laits et autres matières premières laitières aptes à être transformées en fromages , ledit procédé permettant de conserver, voire même d'améliorer , leur aptitude fromagère.

Dans les procédés classiques de fabrication de fromages , l'intensité des traitements thermiques appliqués aux laits de fromagerie varie selon les applications , mais se situe , en général , dans une gamme de température de 65°C à 90°C pour une durée de 10 secondes à 10 minutes.

Ces traitements permettent d'éliminer les flores banale et pathogène du lait.

Pour éliminer la flore sporulée et notamment les Clostridium tyrobutyricum responsables des gonflements tardifs en technologie pâte pressée cuite, il faut mettre en oeuvre des traitements à des températures plus élevées , de l'ordre de 110-160°C pendant quelques secondes CERF O., HERMIER,J. (1973) Thermorésistance anormale de spores bactériennes chauffées par injection directe dans la vapeur . Le Lait, 53, 23-29.

Les spécialistes fromagers connaissent bien les inconvénients de l'application de traitements thermiques intenses sur les laits destinés à la fromagerie . De nombreux travaux ont montré une diminution de l'aptitude des laits traités thermiquement à se transformer en fromages : voir notamment POWELL ME, PALMER LS (1935) Behaviour of caseinate sols in a study of a hysteresis like phenomenon in the rennet coagulation of heated milk . J. Dairy Sci, 18, 401-414 et PYNE GT(1945 ) Rennet hystérésis and the calcium phosphate of milk.Biochem J, 39,385.

L'un des phénomènes essentiels impliqués dans cette baisse de l'aptitude à la coagulation des laits traités thermiquement est l'interaction entre les protéines solubles (α-lactalbumine et β-lactoglobuline) et les caséines par activation des groupements SH et par formation de liaisons disulfures et de liaisons hydrophobes . Cette interaction est à l'origine de la formation de complexes entre la β-lactoglobuline et la caséine kappa .

Il a été montré (FERRON-BAUMY C, MAUBOIS JL, GARRIC G, QUIBLIER JP (1991 ) . Coagulation présure du lait et des rétentats d'ultrafiltration. Effets de divers traitements thermiques . Le Lait, 71, à paraître), que la phase primaire de la coagulation par la présure (appréciée par la cinétique de libération du caséinomacropeptide) se déroule tout à fait normalement dans un lait chauffé à une température élevée , c'est-à-dire que la phase primaire de la coagulation n'est pas perturbée par le chauffage . Toutefois , on note une diminution de la vitesse initiale de la réaction de l'ordre de 30% et une diminution de la teneur finale en caséinomacropeptide de 20 % . La diminution de l'aptitude à la coagulation ou l'absence de coagulation ne serait donc pas due à ce phénomène.

La fixation de β-lactoglobuline sur la caséine kappa provoquerait une augmentation de la charge nette négative des micelles de caséines (REDDY IM , KINSELLA JE (1990) Interaction of β-lactoglobulin with the K-casein in micelles as assessed by chymosin hydrolysis : effect of temperature , heating time, β-lactoglobulin concentration and pH. J. Agric. Food Chem, 38,50-58) . En outre , l'encombrement stérique du complexe s'oppose à l'action de la présure (HIN-DLE EJ, WHEELOCK JV (1970 ) . The primary phase of rennin action in heat-sterilized milk. J. Dairy Res, 37, 389-396) ainsi que (VAN HOOYDONK ACM, OLIEMAN C, HAGEDOORN HG (1984 ) Kinetics of the chymosin-catalysed proteolysis of K-casein in milk.Neth. Milk Dairy J, 37, 207-222.)

Une autre conséquence d'un traitement thermique intense est la diminution sensible de la teneur en calcium soluble , ce qui limite la création des liaisons entre micelles lors de la formation et du durcissement du gel . Le caillé formé est donc plus fragile (plus friable) et peu apte au travail mécanique, tel que le tranchage et le brassage.

Pour résoudre ces problèmes de non coagulabilité ou de mauvaise coagulabilité des laits chauffés et permettre leur utilisation en fromagerie , plusieurs procédés ont été proposés visant , soit à abaisser la charge des micelles de caséines , soit à limiter la formation du complexe β-lactoglobuline-caséine kappa en appauvrissant le lait d'une partie de ses protéines solubles ou en limitant la dénaturation des protéines sériques , soit à enrichir le lait en calcium ionisé .

Une première catégorie de procédés connus comprend des techniques d'abaissement de la charge des micelles de caséines :
- par acidification : voir SINGH H, SHALABI SI, FOX PF, FLYNN A, BARRY A (1988 ) Rennet coagulation of heated milk : influence of pH adjustment before and after heating . J. Dairy Sci, 55, 205-215 . Ces auteurs ont développé une technique de rétablissement de l'aptitude à la coagulation des laits chauffés en ajustant le pH du lait avant ou après traitement thermique . En amont ou en aval du traitement thermique , ils pratiquent une acidification jusqu'à pH 5,5-6,0 suivie d'une neutralisation jusqu'à pH 6,6. Cette technique permet de rétablir la coagulation du lait en jouant sur son équilibre minéral . Elle se traduit par un enrichissement du lait en calcium ionisé . Des défauts d'amertume résultant de cette pratique ont été signalés en technologie Cheddar : BANKS JM (1988 ) Elimination of the development of bitter flavour in cheddar cheese made from milk containing heat-denatured whey protein . J. Soc. Dairy Technol, 41,37-41 ;
- par addition de chlorure de calcium : voir MARSHALL RJ (1986) Improving cheese yields by high heat treatment of milk. J. Dairy Res., 53, 313-322. Cet article décrit la fabrication de fromages de type Cheshire à partir de laits chauffés à 97°C pendant 15 secondes en enrichissant le lait en calcium soluble et en abaissant le pH à 6,40. Il a été alors observé un temps de prise normal du lait ainsi acidifié, mais le caillé présente une teneur en eau trop importante. Ce procédé ne peut pas être employé dans la fabrication de n'importe quel type de fromage. Il ne permet pas de rétablir totalement l'aptitude du lait à la transformation fromagère.

Des techniques conduisant à un abaissement relatif de la charge de surface des micelles par concentration partielle du lait par ultrafiltration ont aussi été proposées. La concentration partielle du lait UHT par ultrafiltration (MAUBOIS JL, MOCQUOT G, VASSAL L (1973) Brevet FR-73 07 117.Procédé de traitement du lait et de sous-produits laitiers) permet d'observer un temps de prise du lait de l'ordre de 30-40 minutes . La fermeté du coagulum obtenu n'est pas cependant totalement satisfaisante pour les technologies à pâte pressée cuite.

Une autre catégorie concerne des techniques pour diminuer la formation du complexe β-lactoglobuline-caséine kappa;
- le procédé HHT (high heat treatment) consiste à limiter la dénaturation des protéines sériques , en particulier de la β-lactoglobuline . Le procédé HHT (voir notamment TROSSAT D (1980) Réalisation et étude des caractéristiques d'un appareil de stérilisation du lait de type HHT à injection directe de vapeur . Thèse de Docteur-Ingénieur ENSAM , Paris ; FABRE C. (1982 ) Etude d'un système de condensation rapide de vapeur dans un liquide en écoulement pour la stérilisation du lait . Thèse Docteur-Ingénieur, INPL, Nancy; ESNOUF C. ABOU MANSOUR E. (1990) : Un nouveau procédé d'injection de vapeur: application à la mise au point d'un nouveau traitement thermique du lait . Le Lait , 70, 233-254 met en oeuvre des traitements thermiques à des températures élevées pendant quelques fractions de secondes. L'efficacité sur le plan hygiénique , obtenue par ce procédé, est comparable à celle obtenue par le traitement UHT, mais la dénaturation des protéines solubles est inférieure pour le traitement HHT. Elle est de l'ordre de 25-30 % pour la β-lactoglobuline. Cette faible dénaturation de la β-lactoglobuline suffit à former des complexes β-lactoglobuline -caséine kappa, qui entraînent une détérioration de l'aptitude fromagère des laits. Cette détérioration se traduit par des temps de prise allongés et une fermeté du caillé diminuée;
- l'appauvrissement du lait en protéines lactosériques , ou déséroprotéinisation , est un autre moyen de diminuer la formation de complexes entre la β-lactoglobuline et la caséine kappa.

La déséroprotéinisation du lait avant traitement thermique a été réalisée à la connaissance de la demanderesse d'une seule façon , à savoir par chromatographie d'exclusion et/ou d'échange d'ions.

Un tel procédé est décrit dans le brevet FR-A-2465 422. Selon ce brevet, on soumet le lait à une déséroprotéinisation partielle ou totale par chromatographie d'exclusion et/ou d'échanges d'ions avant de chauffer le lait à des températures élevées. Ce procédé est d'utilisation industrielle très délicate, dans la mesure où il nécessite le passage d'un liquide aussi colmatant que le lait sur un support chromatographique. Ce procédé se heurte aussi aux contraintes d'environnement liées à la régénération des colonnes de résines et, par ailleurs, le passage du lait sur résines conduit à des rétentions minérales qui modifient profondément les équilibres protéino-minéraux, dont on sait qu'ils jouent un rôle essentiel en transformation fromagère.

Le document EP-B-0 194 286 décrit un procédé pour la production de lait à faible teneur en bactéries, qui comprend une étape de microfiltration du lait. Dans ce procédé, le lait entier est d'abord séparé par centrifugation en une fraction de crème et une fraction de lait écrémé. La fraction de lait écrémé est ensuite microfiltrée en vue d'obtenir un perméat consistant en un lait écrémé ayant une faible teneur en bactéries et un concentré ayant une teneur en matière grasse supérieure à celle du perméat. Le concentré (rétentat) est stérilisé et, dans une dernière étape, le perméat est à nouveau mélangé avec le concentré stérilisé et/ou la fraction de crème, dans les proportions relatives désirées.

D'autre part , la microfiltration du lait sur des membranes ayant des diamètres de pores de 0,2 µ a déjà été réalisée expérimentalement par FAUQUANT J., MAUBOIS JL, PIERRE A (1988 ) Microfiltration du lait sur membrane minérale La Technique Laitière , 1028, 21-23.

Les auteurs de cette publication montrent simplement que le traitement du lait écrémé par passage sur membrane de microfiltration conduit à la séparation de deux liquides : un microfiltrat délipidé contenant la majorité des protéines du lactosérum et un rétentat enrichi en caséine micellaire.

S'il est mentionné que le rétentat de cette microfiltration peut constituer une nouvelle matière première fromagère aucune indication n'est donnée sur un traitement thermique postérieur. Cette publication concerne en fait une méthode préparative des protéines du lait . Elle n'enseigne aucunement la possibilité de traiter thermiquement le rétentat de microfiltration , sans doute parce qu'il était admis par l'homme du métier qu'un tel traitement exerçait une action défavorable sur l'aptitude à la transformation en fromages . Cette publication n'enseigne pas non plus la possibilité technique de diafiltrer un rétentat de microfiltration, traité thermiquement, avec de l'ultrafiltrat de lait.

Le brevet FR-A-24 42 592 repose sur l'application aux rétentats d'ultrafiltration des deux stades de l'action de la présure sur le lait, phénomène connu selon lequel, à basse température (2°-4°C), seule l'hydrolyse enzymatique de la caséine se produit ; l'agrégation des micelles caséiques ainsi hydrolysées est très lente . Le brevet FR-A-2.442.592 propose d'ajouter aux rétentats d'ultrafiltration de l'eau chaude pour amener la température du mélange aux températures de formation du coagulum (30-40°C), mais il n'enseigne ni déséroprotéinisation, ni traitement thermique du rétentat de microfiltration.

L'article de Bastian et al. Journal of Dairy Science vol.74, n° 8, Août 1988 décrit la répartition des composants du lait au cours d'une opération d'ultrafiltration, laquelle est une technique fondamentalement différente de la microfiltration. La microfiltration est une technique de séparation particules-macromolécules ; l'ultrafiltration sépare les macromolécules des solutés micromoléculaires (exemple séparation protéines-sucres) . En outre, la publication de Bastian et al. n'enseigne aucunement la déséroprotéinisation du lait.

L'art antérieur ne fournit donc pas de procédé impliquant un traitement thermique des laits et permettant la conservation de leur aptitude fromagère, de manière fiable et applicable industriellement.

La demanderesse s'est donc attachée à mettre au point un procédé permettant d'obtenir des laits ayant non seulement une bonne qualité microbiologique , mais aussi conservant leur aptitude à la formation de fromages.

Selon l'invention , on a trouvé de manière surprenante que la déséroprotéinisation par microfiltration du lait ou que la combinaison des étapes de déséroprotéinisation par microfiltration et de concentration par ultrafiltration permet d'obtenir des laits qui, une fois traités thermiquement, présentent une bonne aptitude fromagère.

Dans la présente description , on entendra par aptitude fromagère la capacité des laits à former des caillés ou des coagulums.

La présente invention a donc pour objet un procédé de traitement de laits ou autres matières premières laitières aptes à être transformées en fromages, ledit procédé permettant au moins de conserver leur aptitude fromagère, en particulier le temps de prise et la fermeté des coagulums et étant caractérisé en ce que les laits sont déséroprotéinisés par microfiltration puis soumis à un traitement thermique, selon la revendication 1.

Le procédé selon l'invention peut aussi comprendre une étape dans laquelle les rétentats de la microfiltration des laits sont traités par ultrafiltration.

Dans ce cas , divers modes de mise en oeuvre de l'invention sont possibles .

Selon un premier mode de réalisation, l'ultrafiltration est effectuée après le traitement thermique.

Selon un autre mode de réalisation, l'ultrafiltration est effectuée entre la microfiltration et le traitement thermique .

Dans la présente description , on utilisera par commodité l'expression lait ou lait(s) pour désigner la matière première traitée . Il peut s'agir cependant de lait ou de toute autre matière première laitière capable d'être transformée en fromage.

On peut ainsi traiter selon l'invention du lait entier ou écrémé , du lait enrichi en matière grasse , ou du babeurre . Le lait peut provenir de toute femelle laitière : vache , chèvre , brebis , anesse , bufflesse , ces laits pouvant être utilisés seuls ou en mélange.

Les laits sont microfiltrés avec diafiltration. De plus, avantageusement , les membranes de microfiltration ont un diamètre de pores compris environ entre environ 0,05 µm et 0,50 µm et de préférence entre 0,10 µm et 0,20 µm environ.

La perméation des protéines solubles est facilitée par la pratique de la diafiltration du lait au cours de la microfiltration . La technique de diafiltration est connue de l'homme du métier : voir par exemple COOPER AR, BOOTH RG (1980 ) Demetallation of chelating polymers by diafiltration in the presence of a permeable complexing agent . Ultrafiltration membrane and applications . Edited by AR Cooper . Polymer Science and Technology.

Le produit utilisé pour diafiltrer est un liquide ayant une composition voisine de celle de la phase soluble du lait ( perméat d'ultrafiltration).

En fonction du volume de diafiltrat utilisé , le taux de déséroprotéinisation obtenu sur le lait peut aller jusqu'à 100%. Il dépend de l'intensité du traitement . A titre d'illustration, la diafiltration en continu effectuée avec un volume de diafiltrat correspondant à 1,2 fois le volume de lait de départ, conduit à un appauvrissement de la teneur en protéines solubles de 40% soit une diminution de 60% de la quantité de la β-lactoglobuline et de l'α-lactalbumine. De même , si le volume de diafiltration correspond à 3 fois le volume de lait de départ , la déséroprotéinisation réalisée est de 60 %, soit un appauvrissement en β-lactoglobuline et en α-lactalbumine de 80%.

Après la déséroprotéinisation , partielle ou totale, le lait peut subir n'importe quel traitement thermique conduisant à une dénaturation des protéines solubles allant jusqu'à 100%.

Le traitement thermique est en général effectué pendant environ quelques fractions de secondes à 100 sec à une température comprise environ entre 90°C et 160°C , mais il peut être réalisé également à des températures plus basses, lorsque la pression est inférieure à la pression atmosphérique, comme dans le cas d'une concentration thermique en évaporateur.

Au plan pratique , le traitement thermique du lait peut être opéré dans un échangeur thermique , dans un évaporateur thermique ou dans tout autre système de traitement thermique.

L'homme du métier, par des essais de routine , peut choisir le couple temps-température caractéristique du traitement thermique, pour obtenir la qualité bactériologique et hygiénique souhaitée , selon la matière première traitée.

L'ultrafiltration est réalisée préférentiellement sur des membranes ayant un seuil de coupure compris entre 10 kD et 30 kD et avantageusement d'environ 20 kD.

L'aptitude fromagère des laits peut être évaluée par divers instruments mesurant la formation et l'évolution des gels au cours de la coagulation . Parmi ceux-ci , on peut citer le dispositif commercialisé sous la dénomination FORMAGRAPH (Foss Electric) . A l'aide de cet appareil, on montre qu'un lait appauvri selon l'invention de 80% en β-lactoglobuline puis chauffé à 140°C durant 10 secondes présente un temps de prise de 21 minutes tandis que ce même lait simplement chauffé à 140°C durant 10 secondes ne coagule pas après une durée d'observation d'une heure depuis le moment de l'emprésurage.

L'étude des paramètres d'organisation et de fermeté du gel met en évidence une amélioration de la vitesse de durcissement et de la fermeté du gel obtenu par ce procédé par rapport à celle du lait cru.

Pour l'homme du métier , ces deux paramètres sont représentatifs de l'aptitude fromagère du lait.

La vitesse d'organisation du gel obtenu à partir d'un lait appauvri de 40% de ses protéines solubles , chauffé à 140°C pendant 10 secondes puis concentré 1,8 fois, est augmentée de 10% comparativement à celle du lait cru . Une amélioration de la fermeté du caillé issu de ce procédé est également notée . La fermeté est augmentée de 20 %.

Les résultats obtenus par le procédé selon l'invention tendent à confirmer que l'aptitude fromagère des laits chauffés est limitée par le taux de protéines solubles dénaturées et que la déséroprotéinisation d'un lait cru contribue à améliorer son aptitude à la coagulation.

A titre d'exemple , un lait non traité thermiquement et ayant subi une déséroprotéinisation partielle de 40% présente une meilleure aptitude à la coagulation que le lait témoin . Le temps de prise est diminué de 5% , la vitesse d'organisation et la fermeté sont augmentées chacune de 10%.

Le procédé objet de la présente invention permet donc :
- la fabrication de poudres de haute qualité bactériologique et à haute valeur fromagère obtenues par séchage de rétentats de microfiltration (facteur de concentration inférieur ou égal à 3) ou par séchage de laits microfiltrés . Cette utilisation en fromagerie de laits secs revêt une importance économique considérable , particulièrement dans les pays chauds non producteurs de lait.
- la mise en oeuvre de laits stériles en technologie fromagère traditionnelle ou en technologie fromagère impliquant une ultrafiltration.

En outre , on remarque que , par rapport à l'art antérieur précédemment cité , le procédé décrit dans cette invention ne modifie pas la teneur et la répartition des autres constituants du lait, la diafiltration étant réalisée avec du perméat d'ultrafiltration.

Les produits obtenus par le procédé de l'invention se distinguent des produits traditionnels, qui n'ont pas été soumis à une microfiltration , par le fait que , lors de la première étape de leur transformation en fromages , la vitesse initiale de libération du caséinomacropeptide (CMP ) sera plus grande que dans le cas traditionnel.

Le CMP peut être dosé selon la méthode analytique de LEONIL J. et MOLLE D. J. Dairy Res. 58-3,pages 321-328 (1991).

La présente invention est illustrée par la description qui suit et les dessins annexés sur lesquels :
- La figure 1 représente conformément à l'exemple 1 l'évolution des paramètres d'aptitude à la coagulation du lait ( en ordonnées) en fonction du volume de diafiltrat (en abscisses).
- La figure 2 est un diagramme correspondant à un mode de mise en oeuvre de l'invention dans lequel le lait (1) est soumis à une microfiltration-diafiltration (2) puis à un traitement thermique (3) et enfin à une ultrafiltration (4) afin d'obtenir un produit (5).
- La figure 3 est un diagramme correspondant à un mode de mise en oeuvre dans lequel le lait (1) est soumis à une microfiltration-diafiltration (2) puis à une ultrafiltration (4) et enfin à un traitement thermique (3), afin d'obtenir le produit (5).
- La figure 4 est un diagramme correspondant à un mode de mise en oeuvre dans lequel le lait (1) est soumis à une microfiltration-diafiltration (2) puis à un traitement thermique (3) afin d'obtenir le produit (5).

### EXEMPLE 1 :

### Etude de la coagulation du lait en fonction de la teneur en protéines solubles.

Du lait cru a été déséroprotéinisé par microfiltration selon l'invention.

On a mesuré :
- le temps de prise en minutes (R),
- le temps nécessaire (en minutes) à partir du point de floculation pour obtenir un écartement de 20 mm . (K20) sur l'appareil " Formagraph" précité.
- l'écartement en millimètres entre les deux branches du rhéogramme 30 ' après l'addition de présure (a 30).

Le K20 est inversement proportionnel à la vitesse d'organisation du caillé , tandis que la valeur a 30 correspond à la fermeté du coagulum obtenu.

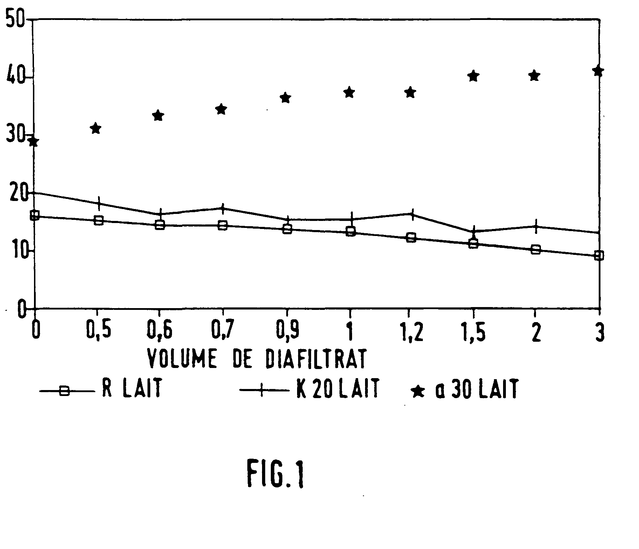

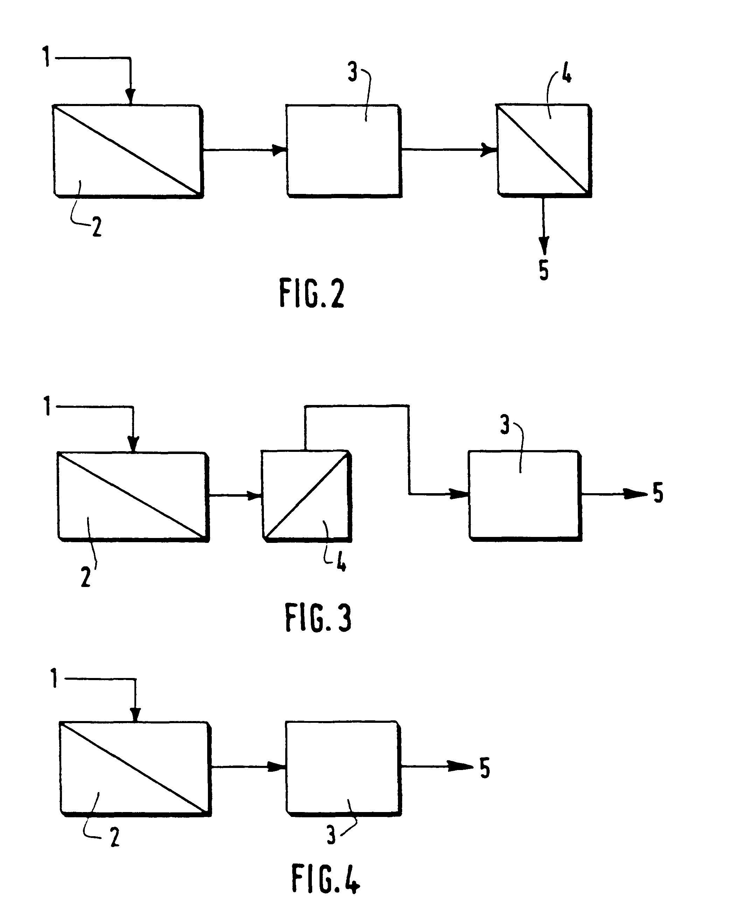

La figure 1 représente l'évolution de ces paramètres en fonction du volume de diafiltrat.

Plus le volume de diafiltrat est important , c'est-à-dire plus la déséroprotéinisation est importante , plus le coagulum obtenu est ferme.

### EXEMPLE 2.

### Préparation du lait .

Un lait écrémé est réchauffé à 50°C puis diafiltré en continu sur un module SFEC S 2*37 1,6 m² équipé de membranes CARBOSEP M 14 dont le diamètre des pores est de 0,14 micromètres . Le débit d'alimentation est de 1800 1/h , le débit de circulation du lait de 7500 1/h , la vitesse de balayage de 4 m/s . La pression à l'entrée du module est d'environ 3 bars et de 0,5 bar à la sortie.

Le diafiltrat utilisé est du perméat d'ultrafiltration de lait à pH initial , obtenu sur une membrane CARBOSEP M 5 ( seuil de coupure de 10 000 daltons) et dont les teneurs n'excèdent pas 0,3 g/l en β-lactoglobuline et 0,1 g/l en α-lactalbumine.

La quantité de diafiltrat apportée pour éliminer 60% de la β-lactoglobuline et de l'α-lactalbumine est de 1,2 fois le volume de lait de départ . Pour éliminer 90 % de chacune de ces deux protéines , elle est de 3 fois le volume de lait mis en oeuvre au départ.

Le lait à l'issue de la diafiltration est stérilisé sur un appareil UHT Laguilharre à caisson de vapeur . Le préchauffage est de 80°C pendant 80 secondes . La température de stérilisation est de 140°C et est appliquée pendant 10 secondes .Du caisson de vapeur , le lait passe dans le caisson de détente pour être refroidi directement à 80°C puis dans le refroidisseur où la température est réglée à 50°C.

Le lait est ensuite concentré deux fois par ultrafiltration sur un module SFEC S 2*37 1,6 m² équipé de membranes CARBOSEP M4 possédant un seuil de coupure de 20 000 dalton .

Les compositions respectives des différents produits (lait cru , lait microfiltré-diafiltré , lait microfiltré-diafiltré et stérilisé, lait microfiltré-diafiltré stérilisé et concentré) obtenus lors d'un essai sont données dans le tableau I ci-après.

### EXEMPLE 3 :

### Préparation de poudre.

Le produit de l'exemple 2 est évaporé sur un évaporateur pilote Laguilharre jusqu'à l'obtention d'un extrait sec du produit de 30 % . La température en tête d'évaporateur est inférieure à 70°C . Le produit est ensuite séché sur une tour pilote avec une température d'entrée de 160°C.

### EXEMPLE 4 :

### Variante de préparation du lait ; obtention de poudre.

Un lait écrémé est réchauffé à 50°C puis diafiltré en continu sur un module SFEC S 2*37 1,6 m² équipé de membranes CARBOSEP M 14 dont le diamètre des pores est de 0,14 micromètres. Le débit d'alimentation est de 1800 1/h, le débit de circulation du lait de 7500 1/h , la vitesse de balayage de 4 m/s . La pression à l'entrée du module est d'environ 3 bars et de 0,5 bar à la sortie.

Le diafiltrat utilisé est du perméat d'ultrafiltration de lait à pH initial , obtenu sur une membrane CARBOSEP M 5 ( seuil de coupure de 10 000 daltons) et dont les teneurs n'excèdent pas 0,3 g/l en β-lactoglobuline et 0,1 g/l en α-lactalbumine.

La quantité de diafiltrat apportée pour éliminer 60% de la β-lactoglobuline et de l'α-lactalbumine est de 1,2 fois le volume de lait de départ . Pour éliminer 90 % de chacune de ces deux protéines , elle est de 3 fois le volume de lait mis en oeuvre au départ.

Le produit est ensuite évaporé sur un évaporateur pilote Laguilharre jusqu'à l'obtention d'un extrait sec du produit de 30 % . La température en tête d'évaporateur est inférieure à 70°C . Le produit est ensuite séché sur une tour pilote avec une température d'entrée de 160°C.

### EXEMPLE 5 :

### Reconstitution du lait à partir de la poudre obtenue selon l'exemple 3 ou 4.

La reconstitution du lait à partir de la poudre obtenue selon l'exemple 3 ou 4 est réalisée de façon à parvenir à un extrait sec dégraissé du lait recombiné de 120 g/kg , soit une quantité de matières azotées totales de 45 g/kg.

Une partie du phosphate et du calcium ayant été insolubilisée pendant les traitements thermiques successifs , il convient de rajouter une dose de phosphate monocalcique de 0,8 g/kg afin de rétablir les équilibres minéraux.

### EXEMPLE 6 :

### Fabrication d'un fromage type camembert.

Le lait est préparé comme indiqué dans les exemples 2 ou 5 . Après standardisation à 35 g/l de matières grasses, ce lait ensemencé avec 1% de levains mésophiles subit une prématuration de 20 heures à 14°C. Du Penicillium casei-colum est ajouté au lait.

Le lendemain , jour de la fabrication, le lait est réchauffé à 33°C puis additionné d'une dose variable de levains mésophiles, fonction des résultats de la prématuration.

Le pH objectif d'emprésurage est de 6,20 . Quand il est atteint , le lait est emprésuré à la dose de 20 ml pour 100 litres de lait . Le temps de prise est de 8 minutes et le temps de durcissement de 45 minutes . Quand le caillé exsude en surface , on effectue un décaillage grossier au sabre.

Le caillé est ensuite moulé puis retourné 7 heures après le moulage et le lendemain de la fabrication, lors du démoulage.

Le pH du fromage est alors de 4,7 et son extrait sec total de 40% . Le fromage est alors réessuyé puis affiné . Il se comporte de la même façon que les produits traditionnels , ses qualités organoleptiques en particulier sont similaires à celles de produits existants.

### EXEMPLE 7 :

### Fabrication d'un fromage type tomme.

Le lait est préparé comme indiqué dans les exemples 2 ou 5.

Le lait standardisé à 28 g/l en matières grasses et dont la teneur en protéines solubles est réduite de moitié par diafiltration est stérilisé à 117°C pendant 15 secondes puis concentré 1,6 fois par ultrafiltration.

Le lait ainsi préparé est ensemencé en levains mésophiles homofermentaires à la dose de 1 % et en levains thermophiles à la dose de 0,5 % . La prématuration dure 16 heures à 10°C.

Le lendemain , jour de la fabrication , le pH du lait est de 6,65 . Le lait réchauffé à 33°C est de nouveau ensemencé en levains lactiques homofermentaires à la dose de 1% . Après 30 minutes de maturation chaude , le pH d'emprésurage objectif de 6,55 est atteint . Le lait est alors emprésuré avec une dose de présure équivalente à 30 ml/100 l à 33 °C. Le temps de prise est de 25 minutes et le temps de durcissement de 12 minutes.

Le découpage du coagulum est réalisé à l'aide d'un tranche-caillé dont la vitesse de rotation augmente progressivement jusqu'à l'obtention d'un grain d'environ 0,7 cm d'arête . La durée du décaillage est de 5 minutes . Le brassage est très progressif à cause de la faible capacité d'exsudation du sérum . Il dure environ 30 minutes.

Le mélange caillé plus sérum est ensuite transféré dans un bac de drainage dans lequel le caillé est pressé 30 minutes à 10 g/cm² dans une salle thermorégulée à 25°C . Le fromage est ensuite moulé puis pressé pendant 4 heures 30 minutes avec une pression initiale de 50 g/cm² pendant 30 minutes puis de 150 g/cm² pendant 4 heures . Le pH du caillé est alors de 5,20 . Le fromage est ensuite salé en saumure.

L'extrait sec total du fromage est de 48% , la teneur en matières azotées totales de 24,7 % et le pH de 5,10.

Un mois après la fabrication , le fromage ne présente aucun défaut organoleptique par rapport aux fromages similaires du commerce.

### EXEMPLE 8 :

### Fabrication d'un fromage type emmental.

La préparation du lait est analogue à celle des exemples 2 ou 5 . Le lait standardisé à 28 g/l de matières grasses et réchauffé à 33°C est ensemencé à 0,5 % en ferments mésophiles homofermentaires , à 0,5 % en streptocoques thermophiles et à 0,05 % en lactobacilles thermophiles.

La maturation dure environ 45 minutes , le pH est alors de 6,60 . Le lait est ensuite emprésuré à la dose de 20 ml pour 100 litres de lait , à une température de 33°C.

Le temps de prise est de 30 minutes , le temps de durcissement de 6 minutes. Le décaillage est progressif car le caillé exsude moins de sérum que dans la fabrication traditionnelle.

Le premier brassage d'une durée de 10 minutes est réalisé de façon ménagée , afin de préserver l'intégrité des grains du caillé . Le coagulum est ensuite chauffé à 54°C pendant 35 minutes puis brassé environ 25 minutes . Quand le caillé est suffisamment cohérent , le sérum est soutiré et le fromage moulé . Il est ensuite pressé à 60 g/cm² pendant 12 heures . Le pH du fromage au démoulage est de 5,20 , son extrait sec total de 60%. Après saumurage , le fromage est affiné dans les conditions habituelles de la technologie de la fabrication des fromages à pâte pressée cuite . Les qualités organoleptiques des fromages obtenus par ce procédé sont équivalentes à celles des fromages obtenus de façon traditionnelle.

**TABLEAU I**

| Composition des produits obtenus sur un essai de préparation du lait . | | | | |
|---|---|---|---|---|
| | A | B | C | D |
| pH | 6,69 | 6,71 | 6,74 | 6,71 |
| Ca t (g/l) | 1,25 | 1,21 | 1,18 | 2,22 |
| Ca s (g/l) | 0,32 | 0,33 | 0,29 | 0,30 |
| MAT (g/l) | 33,1 | 29,8 | 29,6 | 56,4 |
| MAP (g/l) | 31,1 | 27,8 | 26,6 | 54,4 |
| PS natives (g/l) | 6,20 | 2,80 | 1,61 | 3,45 |
| β-lactoglobuline ( g/l) | 3,41 | 0,70 | 0,01 | 0,21 |
| α-lactalbumine (g/l) | 0,85 | 0,21 | 0,21 | 0,39 |
| A : Lait cru témoin B : Lait appauvri de 55 % en protéines solubles C : Lait appauvri de 55% en protéines solubles puis chauffé à 140°C pendant 10 minutes . D : Lait appauvri de 55 % en protéines solubles , chauffé à 140°C pendant 10 minutes et concentré 1,8 fois par ultrafiltration. | | | | |

## Revendications

1. Procédé de traitement de laits et autres matières premières laitières aptes à être transformées en fromages, ledit procédé permettant de conserver ou d'améliorer leur aptitude fromagère ou leur capacité à coaguler et étant **caractérisé en ce que** les laits sont déséroprotéinisés par microfiltration avec diafiltration puis soumis à un traitement thermique qui est effectué sur le rétentat *diafiltré* de microfiltration *qui est un lait déséroprotéinisé*, pendant environ quelques fractions de secondes à 100 sec. à une température comprise environ entre 90°C et 160°C ou à des températures plus basses lorsque la pression est inférieure à la pression atmosphérique, le produit utilisé pour la diafiltration étant un liquide ayant une composition voisine de celle de la phase soluble du lait.

2. Procédé selon la revendication 1, **caractérisé en ce qu'**il comprend de plus une étape d'ultrafiltration.

3. Procédé selon la revendication 2, **caractérisé en ce que** l'ultrafiltration est effectuée après le traitement thermique.

4. Procédé selon la revendication 2, **caractérisé en ce que** l'ultrafiltration est effectuée entre la microfiltration et le traitement thermique.

5. Procédé selon l'une quelconque des revendications 1 à 4, **caractérisé en ce que** la microfiltration est effectuée sur des membranes ayant un diamètre de pores compris entre 0,05µ et 0,50µ, et de préférence entre 0,10 et 0,20µ.

6. Procédé selon l'une quelconque des revendications 2 à 5, **caractérisé en ce que** l'ultrafiltration est effectuée sur une membrane ayant un seuil de coupure compris entre 10 kD et 30 kD et préférentiellement d'environ 20.

7. Procédé selon l'une quelconque des revendications 1 à 6, **caractérisé en ce que** le produit obtenu est séché pour être mis sous forme de poudre.

## Patentansprüche

1. Verfahren zur Behandlung von Milch und anderen Molkerei-Rohstoffen, die dazu geeignet sind, in Käse umgewandelt zu werden, wobei das Verfahren das Erhalten oder Verbessern ihrer Eignung zur Käseherstellung oder ihres Koagulationsvermögens ermöglicht und **dadurch gekennzeichnet ist, daß** die Milch durch Mikrofiltration mit einer Diafiltration von Seroproteinen befreit und anschließend einer thermischen Behandlung unterworfen wird, die am diafiltrierten Retentat erfolgt, und wobei es sich um eine von Seroproteinen befreite Milch handelt, in etwa einigen Sekundenbruchteilen bis 100 s bei einer Temperatur zwischen etwa 90 °C und 160 °C oder tieferen Temperaturen, wenn der Druck niedriger als der Atmosphärendruck ist, wobei das zur Diafiltration verwendete Produkt eine Flüssigkeit mit einer Zusammensetzung ist, die etwa der löslichen Phase der Milch entspricht.

2. Verfahren nach Anspruch 1, **dadurch gekennzeichnet, daß** es darüber hinaus einen Ultrafiltrationsschritt umfaßt.

3. Verfahren nach Anspruch 2, **dadurch gekennzeichnet, daß** die Ultrafiltration nach der thermischen Behandlung durchgeführt wird.

4. Verfahren nach Anspruch 2, **dadurch gekennzeichnet, daß** die Ultrafiltration zwischen der Mikrofiltration und der thermischen Behandlung durchgeführt wird.

5. Verfahren nach einem der Ansprüche 1 bis 4, **dadurch gekennzeichnet, daß** die Mikrofiltration an Membranen mit einem Porendurchmesser zwischen 0,05 µ und 0,50 µ und vorzugsweise zwischen 0,10 und 0,20 µ durchgeführt wird.

6. Verfahren nach einem der Ansprüche 2 bis 5, **dadurch gekennzeichnet, daß** die Ultrafiltration an einer Membran mit einem Rückhalte-Schwellenwert zwischen 10 kD und 30 kD und vorzugsweise etwa 20 kD durchgeführt wird.

7. Verfahren nach einem der Ansprüche 1 bis 6, **dadurch gekennzeichnet, dass** das erhaltene Produkt getrocknet und in Pulverform gebracht wird.

## Claims

1. Process for the treatment of milk and other dairy raw materials capable of being processed into cheese, the said process making it possible to conserve or improve their suitability for cheese-making or their capacity to coagulate and being **characterized in that** the milk is deseroproteinized by microfiltration with diafiltration and then subjected to a thermal treatment which is carried out on the microfiltration diafiltered retentate, which is a deseroproteinized milk, for about a few fractions of seconds to 100 sec at a temperature of between about 90°C and 160°C or at lower temperatures when the pressure is less than atmospheric pressure, the product used for the diafiltration being a liquid that has a composition close to that of the soluble phase of milk.

2. Process according to Claim 1, **characterized in that** it further comprises an ultrafiltration stage.

3. Process according to Claim 2, **characterized in that** the ultrafiltration is carried out after the thermal treatment.

4. Process according to Claim 2, **characterized in that** the ultrafiltration is carried out between the microfiltration and the thermal treatment.

5. Process according to any one of Claims 1 to 4, **characterized in that** the microfiltration is carried out on membranes having a pore diameter of between 0.05 µ and 0.50 µ, and preferably between 0.10 and 0.20 µ.

6. Process according to any one of Claims 2 to 5, **characterized in that** the ultrafiltration is carried out on a membrane having a cut-off threshold of between 10 kD and 30 kD and preferably of about 20 kD.

7. Process according to any one of claim 1 to 6, **characterized in that** the product obtained is dried so as to be in powder form.
